(19) Europäisches Patentamt
European Patent Office
Office européen des brevets

(11) **EP 4 404 424 A1**

(12) **EUROPÄISCHE PATENTANMELDUNG**

(43) Veröffentlichungstag:
**24.07.2024  Patentblatt 2024/30**

(51) Internationale Patentklassifikation (IPC):
**H02J 7/02** (2016.01)    **H02M 1/12** (2006.01)
**H02M 1/14** (2006.01)    **H02M 7/217** (2006.01)

(21) Anmeldenummer: **23220722.5**

(22) Anmeldetag: **29.12.2023**

(52) Gemeinsame Patentklassifikation (CPC):
**H02J 7/02; H02M 1/15;** H02M 1/0064; H02M 3/01;
H02M 3/33573

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **19.01.2023  DE 102023101359**

(71) Anmelder: **Jungheinrich Aktiengesellschaft
22047 Hamburg (DE)**

(72) Erfinder:
• **Petersen, Marinus
  24536 Neumünster (DE)**
• **Warncke, Mathias
  21073 Hamburg (DE)**
• **Wollnack, Simon
  21033 Hamburg (DE)**

(74) Vertreter: **Hauck Patentanwaltspartnerschaft
mbB
Postfach 11 31 53
20431 Hamburg (DE)**

(54) **LADEGERÄT FÜR EIN FLURFÖRDERZEUG**

(57)    Ladegerät für ein Flurförderzeug mit einer an Bord befindlichen Batterie, das einen Leistungskorrekturfilter (PFC) und einen stromgeregelten Wandler aufweist, wobei ein Stromregler (K) aktiv Stromsignale mit einer doppelten Netzfrequenz ($2f_{Netz}$) herausregelt.

Fig. 4

EP 4 404 424 A1

**Beschreibung**

Die vorliegende Erfindung betrifft ein Ladegerät für ein Flurförderzeug mit einer an Bord befindlichen Batterie.

Bei der Entwicklung von Ladegeräten ist es grundsätzlich ein Anliegen, bei Erhöhung des Wirkungsgrades Bauvolumen und Kosten einzusparen. Insbesondere bei Ladegeräten, die dazu ausgebildet sind, an Bord des Flurförderzeugs montiert zu werden, besteht im besonderen Maße die Anforderung nach geringem Bauvolumen und günstiger Herstellung. Durch die Gleichrichtung der 50 Hz-Netzspannung tritt in dem Ladegerät ein 100 Hz-Ripple in einem Zwischenkreis der PFC-Stufe auf. Bei anderen Netzfrequenzen, wie beispielsweise 60 Hz, tritt der Ripple ebenfalls bei der doppelten Netzfrequenz auf. Der Ripple bei der doppelten Netzfrequenz führt als Blindleistung zu Leistungsverlusten in dem Ladegerät, kann EMV-Probleme verursachen und die Batterie sowie den DC-DC-Wandler durch den Wechselanteil belasten. Dieser Ripple wird im Stand der Technik mittels Zwischenkreiskapazitäten geglättet, die in der Regel jedoch ein recht großes Bauvolumen beanspruchen, was im Widerspruch zu dem Ziel eines kompakten Ladegeräts steht.

Aus US 2021/0070190 A1 ist eine DC-Quelle bekannt geworden, bei der ein Kondensator in Serie mit einem DC/DC-Gleichrichter geschaltet ist, um durch eine zusätzlich eingespeiste Hilfsspannung den durch den Gleichrichter erzeugten Ripple bei 2f zu kompensieren.

Der Erfindung liegt die Aufgabe zugrunde, ein Ladegerät für ein Flurförderzeug bereitzustellen, das mit einfachen Mitteln das Auftreten eines Ripples bei der doppelten Frequenz vermeidet.

Erfindungsgemäße wird die Aufgabe durch ein Ladegerät mit den Merkmalen aus Anspruch 1 gelöst. Vorteilhafte Ausgestaltungen bilden die Gegenstände der Unteransprüche.

Das erfindungsgemäße Ladegerät ist vorgesehen und bestimmt für ein Flurförderzeug, das mit einer an Bord befindlichen Batterie, bevorzugt eine Lithium-Ionen-Batterie ausgestattet ist. Das Ladegerät weist einen Leistungskorrekturfilter und einen stromgeregelten Wandler auf. Erfindungsgemäß ist ein Stromregler vorgesehen, der aktiv Stromsignale mit einer doppelten Netzfrequenz ($2f_{Netz}$) herausregelt. Mit den aktiv herausgeregelten Stromsignalen werden auch Ausgangsspannungen mit der doppelten Netzfrequenz herausgeregelt. Der besondere Vorteil der erfindungsgemäßen Ausgestaltung liegt darin, dass eine Reduzierung der Speicherkomponenten mit Zwischen- und Ausgangskreiskondensatoren möglich ist, wodurch das Bauvolumen reduziert wird und Kostenvorteile entstehen. Auch besitzt das erfindungsgemäße Ladegerät einen hohen Wirkungsgrad, da EMV-Filter sowie Glättungsdrosseln deutlich reduziert werden oder sogar entfallen können. Zudem zeichnet sich die erfindungsgemäße Lösung dadurch aus, dass die Komponenten der Schaltung hinsichtlich ihrer Größe verkleinert werden können, was zu einer höheren Leistungsdichte und einem sparsamen Umgang mit Ressourcen führt.

In einer bevorzugten Ausgestaltung regelt der Stromregler den Ausgangsstrom des stromgeregelten Wandlers. Der Stromregler bekommt dabei seine Informationen aus dem Zwischenkreis der PFC (Korrekturfilter), wobei die Regelung im DC/DC-Wandler erfolgt. Hierdurch werden Zwischenkreisstrom/-spannung und Ausgangsstrom/-spannung entkoppelt.

In einer weiter bevorzugten Ausgestaltung ist der Stromregler als ein stromgeregelter DC/DC-Wandler oder als ein galvanisch getrennter LLC-Wandler mit einem Stromdoppler ausgestattet. Neben dem stromgeregelten DC/DC-Wandler können auch andere Topologien und Gestaltungen wie Phase-Shifted Full Bridge, LCC Resonanzwandler und Dual Active Bridge für den Wandler zum Einsatz kommen.

In einer bevorzugten Ausgestaltung der Erfindung ist der Stromregler als Resonanzregler ausgebildet, an dem ein doppelter Netzfrequenzwert anliegt. Der Netzfrequenzwert kann auf einem hinterlegten Wert der doppelten Netzfrequenz oder einem gemessenen Netzfrequenzistwert beruhen. Dem liegt die Idee zugrunde, einen hochdynamischen Resonanzregler zur aktiven Glättung der Störgrößen einzusetzen. Dabei wird der Teil mit der doppelten Netzfrequenz als Störgröße zusammen mit der Ladestromregelung herausgeregelt.

An dem Stromregler liegt ein Regelfehler aus Ladestromsollwert und einem an der Batterie anliegenden Ladestromistwert an. Die Stellgröße des Stromreglers wird für den Wandler gebildet. Indem die allgemein immer auftretenden Störgrößen aus dem Stromregler herausgeregelt werden, wird auch das Ripple-Signal herausgefiltert.

In einer bevorzugten Ausgestaltung besteht der Stromregler aus einer Zusammenschaltung, bevorzugt aus einer Reihenschaltung von zwei Reglern, von denen ein erster Regler ausgebildet ist, die Eingangsstörung zu kompensieren und ein zweiter Regler dazu ausgebildet ist, den an der Batterie anliegenden Ladestromistwert zu regeln. Bevorzugt liegt an dem ersten Regler der doppelte Netzfrequenzistwert an.

In einer bevorzugten Ausgestaltung ist das Ladegerät dazu ausgebildet, an Bord des Flurförderzeugs montiert zu werden.

Ein bevorzugtes Ausführungsbeispiel wird nachfolgend anhand der Figuren erläutert. Es zeigen:

Figur 1    die bevorzugte Reglerstruktur für eine LLC-Leistungselektronik,

Figur 2    den näheren Aufbau des Stromkeglers K für eine LLC,

Figur 3    zeigt einen schematischen Aufbau eines Ladegeräts für ein Flurförderzeug mit DC/DC-Wandler und Ausgangskondensator und

Figur 4    den Aufbau eines galvanisch getrennten LLC-Wandlers mit einem Stromdoppler zur Ladestromregelung.

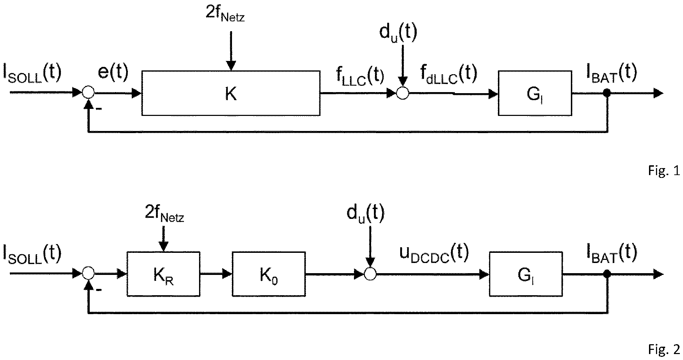

Fig. 1 stellt einen Regelkreis mit einem Stromregler K und einer Regelstrecke G_I dar. Die Regelstrecke G_I beschreibt das Eingangs-/Ausgangs-Verhalten des DC/DC-Wandlers von Stellgröße $f_{dLLC}(t)$ zu dem Istwert des Batterieladestroms $I_{Bat}(t)$. Figur 1 beschreibt somit eine Reglerstruktur, bei der ein Reglerfehler $e(t)$ an einem Stromregler K anliegt. Der Reglerfehler $e(t)$ wird gebildet aus der Differenz dem Sollwert für den Batterieladestrom $I_{soll}(t)$ und dem Istwert für den an der Batterie anliegenden Ladestrom $I_{Bat}(t)$. Zusätzlich liegt an dem Stromregler K die doppelte Netzfrequenz an. Bei der doppelten Netzfrequenz handelt es sich in einem 50 Hz-Netz um ein 100 Hz-Signal. Das 100 Hz-Signal kann als vorbestimmtes Signal eingespeist werden oder es kann als doppelter Istwert der aktuellen Netzspannung angelegt werden. Der Stromregler K erzeugt eine Stellgröße $f_{LLC}(t)$. Hierbei kann es sich beispielsweise um die Schaltfrequenzen für den LLC-Wandler handeln, mit denen dieser den Batterieladestrom $I_{Bat}(t)$ erzeugt. Zu der Stellgröße $f_{LLC}(t)$ kommt eine allgemeine Störung $d_u(t)$ hinzu, so dass eine gestörte Stellgröße $f_{dLLC}(t)$ an der Regelstrecke Gi anliegt.

Die gestörte Stellgröße $f_{dLLC}(t)$ liegt an der LLC-Leistungselektronik an. Über die Rückkopplung des Batterieladestroms wird auch der Beitrag der gestörten Stellgröße in der LLC-Leistungselektronik herausgeregelt, damit zugleich auch der in der LLC-Leistungselektronik entstehende 100 Hz-Ripple.

Figur 2 zeigt den näheren Aufbau des Reglers K. Hierbei ist ein Regler $K_R$ vorgesehen, der für eine Störungsunterdrückung der aufgrund der Reglerstruktur auftretenden Störung $d_u(t)$ ausgelegt ist und folglich auch die AC-Störung des Ladestroms $I_{Bat}(t)$ ausgleicht. Der in Reihe geschaltete zweite Regler $K_0$ ist zur Regelung des Ladestroms $I_{Bat}(t)$ und zur Einstellung der Bandbreite des Regelkreises ausgelegt. Die Regler besitzen beispielsweise folgende Gestalt:

$$K_R(s) = \frac{\left(\frac{s}{\omega_\Delta} + 1\right)^2}{\left(\frac{s}{\omega_\Delta}\right)^2 + \frac{2\delta s}{\omega_\Delta} + 1}.$$

$$K_0(s) = \frac{s + \omega_z}{s} \cdot \frac{1}{\left(\frac{s}{\omega_g} + 1\right)^2}$$

Hierbei steht $\omega_\Delta = 4\pi f_{Netz}$ und beinhaltet die Information über die doppelte Netzfrequenz. $\delta$ ist eine positive Konstante zur Abstimmung des Reglers $K_R$. $K_P$ ist eine positive Konstante und bestimmt die dynamischen Eigenschaften der Regelkomponente $K_0$. Die Verstärkung der Reglerkomponente $K_0$ führt zu einer guten Bandbreite des geschlossenen Strom-Regelkreises, bevorzugt mehr als 10 Hz, insbesondere mehr als $10^2$ Hz und besonders bevorzugt mehr als $10^3$ Hz. Die Verstärkung der Reglerkomponente $K_0$ für zu einer guten Sollwert-Verfolgung im geschlossenen Strom-Regelkreis, wobei Reglerfehler von weniger als $10^{-2}$ des Sollwerts, bevorzugt von weniger als $10^{-4}$ und ganz besonders bevorzugt von weniger als $10^{-6}$ erzielt werden können. $\omega_z$ ist eine positive Konstante und dient zur Einstellung der dynamischen Eigenschaften des Regelkreises $K_0$. $\omega_g$ ist eine positive Konstante zur Unterdrückung des Messrauschens. Die Verstärkung des Reglers bei der doppelten Netzfrequenz ist hoch und führt somit zu einer guten Störunterdrückung. Im Hinblick auf die Schwingungsneigung und die Dämpfung ist auch die Phasenreserve ein wichtiges Maß, hier besitzt der vorstehende Regler mit seinen zusammengeschalteten Reglerkomponenten $K_R$ und $K_0$ eine positive Phasenreserve, bevorzugt mit mehr als 10°, insbesondere mit mehr als 30° und besonders bevorzugt mit mehr als 60°.

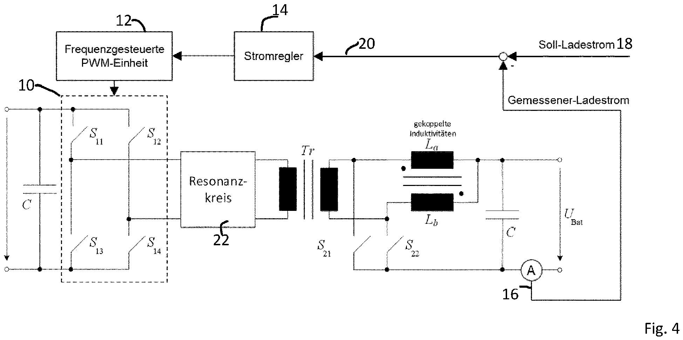

Figur 4 zeigt ein Einbauladegerät, wie es beispielsweise aus DE 10 2019 122 659 A1 bekannt geworden ist. An der Schaltung liegt eine externe Spannung $U_{ZK}$ an. Der Resonanzwandler 10 besitzt Transistor $S_{11}$, $S_{12}$, $S_{13}$ und $S_{14}$, die beispielsweise als GaN-Transistoren ausgebildet sein können. Der Resonanzwandler 10 ist über eine frequenzgesteuerte PWM-Einheit 12 angesteuert, die von einem Stromregler 14 ihre Steuergröße erhält. An dem Stromregler 14 liegt ein Regelfehler 20 aus Soll-Ladestrom 18 und gemessenen Ladestrom 16 an. Über einen Resonanzkreis 22 liegt die Spannung an einem Transformator $T_r$ an. Der Transformator $T_r$ besitzt sekundärseitig einen Stromdoppler mit zwei gekoppelten Induktivitäten $L_a$ und $L_b$. Der Stromdoppler wird über die Transistoren $S_{21}$ und $S_{22}$ geschaltet, die beispielsweise ebenfalls als GaN-Transistoren ausgebildet sein können. Die Ausgangsspannung wird über einen Kondensator C geglättet und liegt als Ladespannung $U_{Bat}$ an der Batterie an.

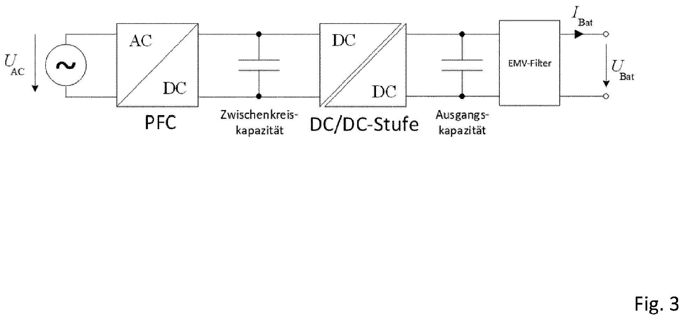

Der hochdynamische Resonanzregler für die doppelte Netzfrequenz glättet aktiv die 100 Hz-Komponente aus der Gleichrichtung der Netzspannung. Figur 3 zeigt ein herkömmliches Ladegerät, an dem eine Wechselspannung $U_{AC}$ anliegt und über einen Gleichrichter mit PFC in einen Zwischenkreis eingespeist wird. Eine DC/DC-Stufe erzeugt die Ladespannung $U_{BAT}$ für die zu ladende Batterie. Eine Ausgangskapazität glättet die Ausgangsspannung der DC/DC-Stufe ebenso wie der nachgeschaltete EMV-Filter. Die erfindungsgemäße Lösung aus Figur 4 reduziert die Speicherkomponenten für Zwischen- und Ausgangskreiskondensatoren, wodurch Bauvolumen und Kostenvorteile möglich sind.

Bezugszeichenliste

| | |
|---|---|
| K | Stromregler |
| $G_I$ | Regelstrecke |
| $f_{LLC,dLLC}(t)$ | Stellgröße |
| $I_{Bat}(t)$ | Batterieladestrom |
| $e(t)$ | Regelfehler |
| $I_{Soll}(t)$ | Sollbatterieladestrom |
| $du(t)$ | Störung |
| $S_{11,12,13,14}$ | Transistor |
| 10 | Resonanzwandler |
| 12 | PWM-Einheit |
| 14 | Stromregler |
| 16, 18 | Ladestrom |
| 20 | Regelfehler |
| 22 | Resonanzkreis |
| $T_T$ | Transformator |
| $S_{21,22}$ | GaN-Transformator |
| C | Kondensator |

**Patentansprüche**

1. Ladegerät für ein Flurförderzeug mit einer an Bord befindlichen Batterie, das einen Leistungskorrekturfilter (PFC) und einen stromgeregelten Wandler aufweist, **dadurch gekennzeichnet, dass** ein Stromregler (K) aktiv Stromsignale mit einer doppelten Netzfrequenz ($2f_{Netz}$) herausregelt.

2. Ladegerät nach Anspruch 1, **dadurch gekennzeichnet, dass** der Stromregler (K) den Ausgangsstrom des stromgeregelten Wandlers regelt.

3. Ladegerät nach Anspruch 1 oder 2, **dadurch gekennzeichnet, dass** als stromgeregelter Wandler ein stromgeregelter DC/DC-Wandler vorgesehen ist.

4. Ladegerät nach einem der Ansprüche 1 bis 3, **dadurch gekennzeichnet, dass** als Stromregler (K) ein galvanisch getrennter LLC-Wandler mit einem Stromdoppler vorgesehen ist.

5. Ladegerät nach einem der Ansprüche 1 bis 4, **dadurch gekennzeichnet, dass** der Stromregler (K) als Resonanzregler ausgebildet, an dem ein doppelter Netzfrequenzistwert ($2f_{Netz}$) anliegt.

6. Ladegerät nach Anspruch 5, **dadurch gekennzeichnet, dass** ein Regelfehler (e) aus Ladestromsollwert ($I_{Soll}$) und einem an der Batterie anliegenden Ladestromistwert ($I_{Bat}$) gebildet wird und an dem Stromregler (K) anliegt, wobei der Stromregler eine Stellgröße für die Regelstrecke ($G_I$) bildet.

7. Ladegerät nach Anspruch 6, **dadurch gekennzeichnet, dass** der Stromregler (K) aus einer Zusammenschaltung von zwei Reglern ($K_R$, $K_0$) besteht.

8. Ladegerät nach Anspruch 7, **dadurch gekennzeichnet, dass** ein erster Regler ($K_R$) ausgebildet ist, um allgemeine Störsignale ($d_u$) zu kompensieren und ein zweiter Regler ($K_0$) dazu ausgebildet ist, den an der Batterie anliegenden Ladestromistwert ($I_{Bat}$) zu regeln.

9. Ladegerät nach Anspruch 7 oder 8, **dadurch gekennzeichnet, dass** an dem ersten Regler ($K_R$) der doppelte Netzfrequenzistwert ($2f_{Netz}$) anliegt.

10. Ladegerät nach einem der Ansprüche 1 bis 9, **dadurch gekennzeichnet, dass** das Ladegerät dazu ausgebildet ist, um an Bord des Flurförderzeugs montiert zu werden.

Fig. 1

Fig. 2

$U_{AC}$

AC / DC

PFC

Zwischenkreiskapazität

DC / DC

DC/DC-Stufe

Ausgangskapazität

EMV-Filter

$I_{Bat}$

$U_{Bat}$

Fig. 3

Fig. 4

Europäisches Patentamt
European Patent Office
Office européen des brevets

# EUROPÄISCHER RECHERCHENBERICHT

Nummer der Anmeldung

EP 23 22 0722

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | TAE-HOON KIM ET AL: "Design and control of the phase shift full bridge converter for the on-board battery charger of the electric forklift", POWER ELECTRONICS AND ECCE ASIA (ICPE&ECCE), 2011 IEEE 8TH INTERNATIONAL CONFERENCE ON, IEEE, 30. Mai 2011 (2011-05-30), Seiten 2709-2716, XP031956357, DOI: 10.1109/ICPE.2011.5944761 ISBN: 978-1-61284-958-4 * Seite 6015 - Seite 6017 *<br>----- | 1-10 | INV.<br>H02J7/02<br>H02M1/12<br>H02M1/14<br>H02M7/217 |
| Y | LIU CHAOHUI ET AL: "Current ripple reduction in 4kW LLC resonant converter based battery charger for electric vehicles", 2015 IEEE ENERGY CONVERSION CONGRESS AND EXPOSITION (ECCE), IEEE, 20. September 2015 (2015-09-20), Seiten 6014-6021, XP032801439, DOI: 10.1109/ECCE.2015.7310503 [gefunden am 2015-10-27] * Seite 2709 - Seite 2715 *<br>----- | 1-10 | RECHERCHIERTE SACHGEBIETE (IPC)<br><br>H02J<br>H02M |
| A | EP 2 781 012 B1 (QUALCOMM INC [US]) 13. Juli 2016 (2016-07-13) * Zusammenfassung; Abbildungen 7,9 *<br>----- | 1-10 | |
| A | DE 10 2019 122659 A1 (JUNGHEINRICH AG [DE]) 25. Februar 2021 (2021-02-25) * Seiten 2,3; Abbildungen 1,2 *<br>----- | 1-10 | |

-/--

Der vorliegende Recherchenbericht wurde für alle Patentansprüche erstellt

| Recherchenort | Abschlußdatum der Recherche | Prüfer |
|---|---|---|
| München | 28. Mai 2024 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches Patentamt / European Patent Office / Office européen des brevets

**EUROPÄISCHER RECHERCHENBERICHT**

Nummer der Anmeldung

EP 23 22 0722

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DA S MORAES CAIO G ET AL: "A Two-Stage Battery Charger with Active Power Decoupling Cell for Small Electric Vehicles", 2019 IEEE 15TH BRAZILIAN POWER ELECTRONICS CONFERENCE AND 5TH IEEE SOUTHERN POWER ELECTRONICS CONFERENCE (COBEP/SPEC), IEEE, 1. Dezember 2019 (2019-12-01), Seiten 1-6, XP033758359, DOI: 10.1109/COBEP/SPEC44138.2019.9065870 [gefunden am 2020-04-13] * Zusammenfassung; Abbildungen 1,2 * ----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 28. Mai 2024 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 22 0722

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2024

| Im Recherchenbericht angeführtes Patentdokument | Datum der Veröffentlichung | Mitglied(er) der Patentfamilie | Datum der Veröffentlichung |
|---|---|---|---|
| EP 2781012 B1 | 13-07-2016 | CN 103947097 A | 23-07-2014 |
| | | CN 106300959 A | 04-01-2017 |
| | | EP 2781012 A1 | 24-09-2014 |
| | | EP 3057220 A1 | 17-08-2016 |
| | | ES 2590467 T3 | 22-11-2016 |
| | | HU E030018 T2 | 28-04-2017 |
| | | JP 5905116 B2 | 20-04-2016 |
| | | JP 2015502731 A | 22-01-2015 |
| | | KR 20140094611 A | 30-07-2014 |
| | | KR 20160135861 A | 28-11-2016 |
| | | US 2013128638 A1 | 23-05-2013 |
| | | US 2015263539 A1 | 17-09-2015 |
| | | WO 2013074529 A1 | 23-05-2013 |
| DE 102019122659 A1 | 25-02-2021 | DE 102019122659 A1 | 25-02-2021 |
| | | EP 3782953 A1 | 24-02-2021 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20210070190 A1

- DE 102019122659 A1